(19) Europäisches Patentamt

European Patent Office

Office européen des brevets

(11) **EP 1 638 362 A2**

(12) **EUROPEAN PATENT APPLICATION**

(43) Date of publication:
22.03.2006 Bulletin 2006/12

(51) Int Cl.:
*H04Q 7/38* (2006.01)　　　　*H04L 1/18* (2006.01)

(21) Application number: 05255758.4

(22) Date of filing: 16.09.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 17.09.2004 US 944449

(71) Applicant: LUCENT TECHNOLOGIES INC.
Murray Hill, New Jersey 07974-0636 (US)

(72) Inventors:
• Fang-Chen, Cheng
  Randolph
  New Jersey 07869 (US)

• Teck, Hu
  Budd Lake
  New Jersey 07828 (US)
• Yifei, Yuan
  Kearny
  New Jersey 07032 (US)

(74) Representative: Sarup, David Alexander et al
Lucent Technologies EUR-IP UK Limited
5 Mornington Road
Woodford Green, Essex IG8 0TU (GB)

(54) **Hybrid automatic repeat request operation during soft hand offs in a wireless system**

(57)　A method for controlling communications between a mobile device and a pair of base stations during a soft hand off mode of operation in a wireless system using HARQ is provided. In the soft hand off mode of operation, the mobile device communicates with a plurality of base stations and receives a plurality of feedback signals in the form of NACK and ACK signals from each of the plurality of base stations. The mobile device determines the reliability of each of these feedback signals, combines the reliable signals, and retransmits the old information if no ACK signals are received. On the other hand, the receipt of even one reliable ACK signal results in new data being delivered to the plurality of base stations.

**FIGURE 3**

Description

## BACKGROUND OF THE INVENTION

### 1. FIELD OF THE INVENTION

This invention relates generally to telecommunications, and, more particularly, to wireless communications.

### 2. DESCRIPTION OF THE RELATED ART

In the field of wireless telecommunications, such as cellular telephony, a system typically includes a plurality of base stations distributed within an area to be serviced by the system. Various users within the area, fixed or mobile, may then access the system and, thus, other interconnected telecommunications systems, via one or more of the base stations. Typically, a mobile device maintains communications with the system as the mobile device passes through an area by communicating with one and then another base station, as the user moves. The mobile device may communicate with the closest base station, the base station with the strongest signal, the base station with a capacity sufficient to accept communications, *etc.*

Commonly, as the mobile device transitions from one base station to another, there is a period of time during which the mobile device may be communicating with more than one base station. The process of transitioning the mobile device from one base station to another is commonly referred to as soft hand off (SHO). During SHO, both base stations may be receiving communications from the mobile device.

In some telecommunications systems, communications between the mobile devices and the base stations are accomplished using a Hybrid Automatic Repeat Request (HARQ) channel encoding technique to improve the performance. Generally, in an uplink communications system employing HARQ, a transmitter, such as the mobile device, sends information to a receiver, such as the base station. If the base station properly receives the information, an acknowledgment signal (ACK) is sent back to the mobile device and the process ends. On the other hand, if the base station detects an error in the received information, then it sends a negative acknowledgment signal (NACK) to the mobile device. The mobile device responds to the NACK by retransmitting the varied set of encoded information. The process repeats until the mobile device receives an ACK from the base station or a preselected number of attempts (*e.g.,* three) are made.

The HARQ technique, however, can be problematic during SHO. Since the mobile device is communicating with more than one base station (e.g., two base stations, A and B) during SHO, it is highly possible that base station A will receive the information properly and return an ACK, while base station B may not, returning a NACK instead due to link imbalance and inner loop power control combining strategy to mitigate toward the stronger link. In this situation, if the mobile device ignores the NACK from base station B, and communicates "new" information, base station B may misinterpret the "new" information as a retransmission of the redundancy version of the "old" information. Similarly, if the mobile device ignores the ACK from base station A, and retransmits the "old" information, base Station A may misinterpret the retransmission as a transmission of "new" information. Neither scenario is desirable in an efficient and reliable telecommunications system.

The present invention is directed to overcoming, or at least reducing, the effects of one or more of the problems set forth above.

## SUMMARY OF THE INVENTION

In one aspect of the instant invention, a method is provided for controlling a communications system. The method comprises communicating a first packet of information to a first and second base station. Thereafter, an acknowledgment signal is received from the first base station and a negative acknowledgment signal is received from the second base station. A communication is then sent to at least the second base station that a second packet of information is a new packet of information.

In another aspect of the instant invention, a method is provided for controlling a communications system. The method comprises communicating a first packet of information to a plurality of base stations, and receiving one of an acknowledgment signal and a negative acknowledgment signal from at least a portion of the plurality of base stations. Thereafter, a second packet of information is communicated to the plurality of base stations, where the second packet of information contains new information in response to receiving at least one acknowledgment signal from the plurality of base stations. At least a portion of the base stations providing a negative acknowledgment signal are sent a communication that the second packet of information contains new information.

In still another aspect of the instant invention, a method is provided for controlling a communications system. The method comprises receiving a first packet of information, and sending a negative acknowledgment signal. Thereafter, a communication is received that a second packet of information is a new packet of information.

## BRIEF DESCRIPTION OF THE DRAWINGS

The invention may be understood by reference to the following description taken in conjunction with the accompanying drawings, in which like reference numerals identify like elements, and in which:

   Figure 1A is a block diagram of a communications system, in accordance with one embodiment of the present invention;

Figure 1B is a stylistic representation of a region in which the communications system of Figure 1A may be employed;

Figure 2 depicts a block diagram of one embodiment of a Base station and a mobile device used in the communications system of Figure 1; and

Figure 3 is a flow diagram illustrating the interoperation of Base station A, Base station B and the mobile device of Figures 1 and 2.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

## DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

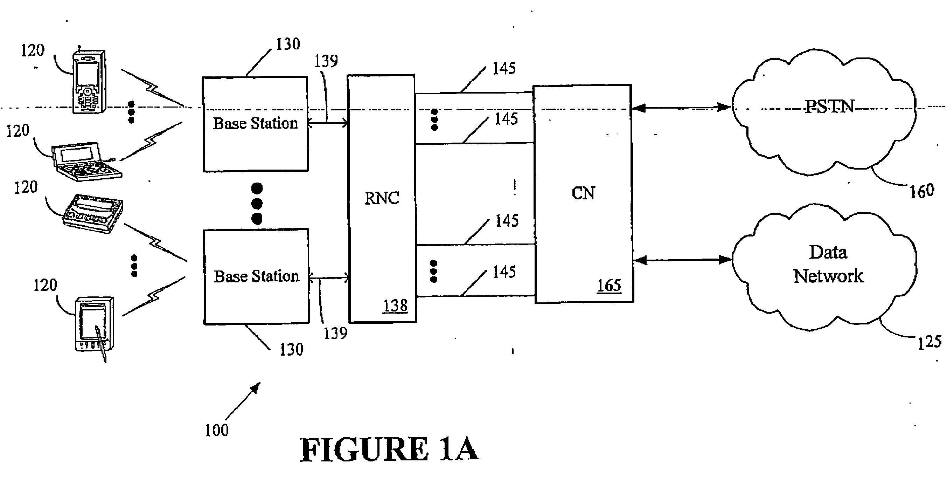

Turning now to the drawings, and specifically referring to Figure 1A, a communications system 100 is illustrated, in accordance with one embodiment of the present invention. For illustrative purposes, the communications system 100 of **Figure 1A** is a Universal Mobile Telephone System (UMTS), although it should be understood that the present invention may be applicable to other systems that support data and/or voice communication. The communications system 100 allows one or more mobile devices 120 to communicate with a data network 125, such as the Internet, and/or a public telephone system (PSTN) 160 through one or more base stations 130. The mobile device 120 may take the form of any of a variety of devices, including cellular phones, personal digital assistants (PDAs), laptop computers, digital pagers, wireless cards, and any other device capable of accessing the data network 125 and/or the PSTN 160 through the base station 130.

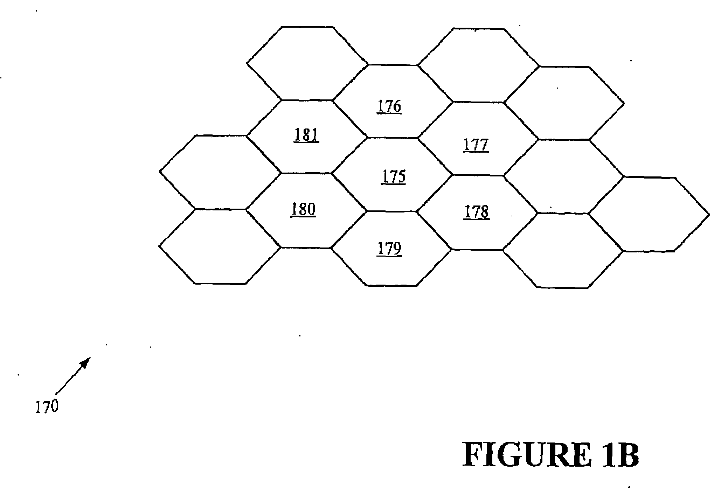

In one embodiment, a plurality of the base stations 130 may be coupled to a Radio Network Controller (RNC) 138 by one or more connections 139, such as **T1/EI** lines or circuits, ATM circuits, cables, optical digital subscriber lines (DSLs), and the like. Although one RNC 138 is illustrated, those skilled in the art will appreciate that a plurality of RNCs 138 may be utilized to interface with a large number of Base stations 130. Generally, the RNC 138 operates to control and coordinate the base stations 130 to which it is connected. The RNC 138 of Figure 1 generally provides replication, communications, runtime, and system management services, and, as discussed below in more detail below, may be responsible for communicating ACK/NACK status associated with a particular transmission of a mobile device 120 during SHO between the base stations 130.

As is illustrated in Figure 1B, a region 170 to be serviced by the system 100 is separated into a plurality of regions or cells, each being associated with a separate base station 130. Typically, each cell has a plurality of adjacent neighboring cells. For example, the cell 175 has six neighboring cells 176-181 such that a mobile device 120 entering the cell 175 may travel from one of the neighboring cells 176-181. Thus, SHO may take place when a mobile device 120 enters the cell 175 from any of the neighboring cells 176-181.

Returning to Figure 1A, the RNC 138 is also coupled to a Core Network (CN) 165 via a connection 145, which may take on any of a variety of forms, such as T1/EI lines or circuits, ATM circuits, cables, optical digital subscriber lines (DSLs), and the like. Generally the CN 165 operates as an interface to the data network 125 and/or to the public telephone system (PSTN) 160. The CN 165 performs a variety of functions and operations, such as user authentication, however, a detailed description of the structure and operation of the CN 165 is not necessary to an understanding and appreciation of the instant invention. Accordingly, to avoid unnecessarily obfuscating the instant invention, further details of the CN 165 are not presented herein.

Thus, those skilled in the art will appreciate that the communications system 100 enables the mobile devices 120 to communicate with the data network 125 and/or the PSTN 160. It should be understood, however, that the configuration of the communications system 100 of Figure 1A is exemplary in nature, and that fewer or additional components may be employed in other embodiments of the communications system 100 without departing from the spirit and scope of the instant invention.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

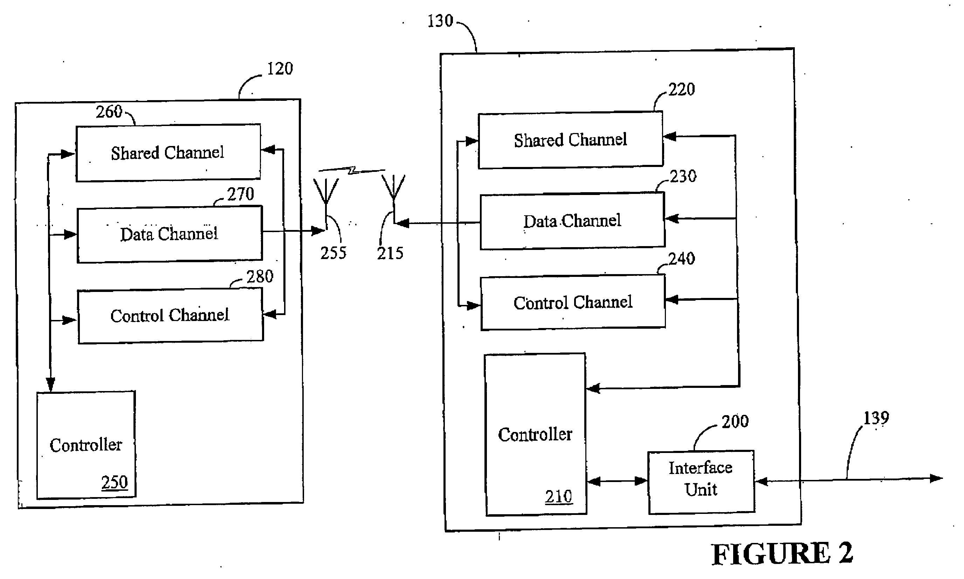

Referring now to Figure 2, a block diagram of one embodiment of a functional structure associated with an exemplary base station 130 and mobile device 120 is shown. The base station 130 includes an interface unit 200, a controller 210, an antenna 215 and a plurality of channels: such as a shared channel 220, a data channel 230, and a control channel 240. The interface unit 200, in the illustrated embodiment, controls the flow of information between the base station 130 and the RNC 138 (see Figure 1A). The controller 210 generally operates to control both the transmission and reception of data and control signals over the antenna 215 and the plurality of channels 220, 230, 240 and to communicate at least portions of the received information to the RNC 138 via the interface unit 200.

The mobile device 120 shares certain functional attributes with the base station 130. For example, the mobile device 120 includes a controller 250, an antenna 255 and a plurality of channels: such as a shared channel 260, a data channel 270, and a control channel 280. The controller 250 generally operates to control both the transmission and reception of data and control signals over the antenna 255 and the plurality of channels 260, 270, 280.

Normally, the channels 260, 270, 280 in the mobile device 120 communicate with the corresponding channels 220, 230, 240 in the base station 130. Under the operation of the controllers 210, 250, the channels 220, 260; 230, 270; 240, 280 are used to effect a controlled scheduling of communications from the mobile device 120 to the base station 130.

Generally, the mobile device 120 has a first and second status in which it may operate in the network. In the first status, the mobile device 120 is in contact with a plurality of the base stations 130, which is sometimes referred to as a soft hand off ("SHO") or rate controlled mode of operation. In the second status, the "time scheduled" mode of operation, the mobile device 120 is in contact with only one of the base stations 130, which is called the serving base station. The methodology described herein is useful in controlling mobile device transmissions on the uplink when the mobile device 120 is in the SHO mode of operation. The following description and drawings are presented with reference to the mobile device 120 entering and leaving the SHO mode of operation, and being in the SHO mode of operation. A detailed discussion of the "time scheduled" mode of operation is not presented herein so as to avoid unnecessarily obfuscating the instant invention.

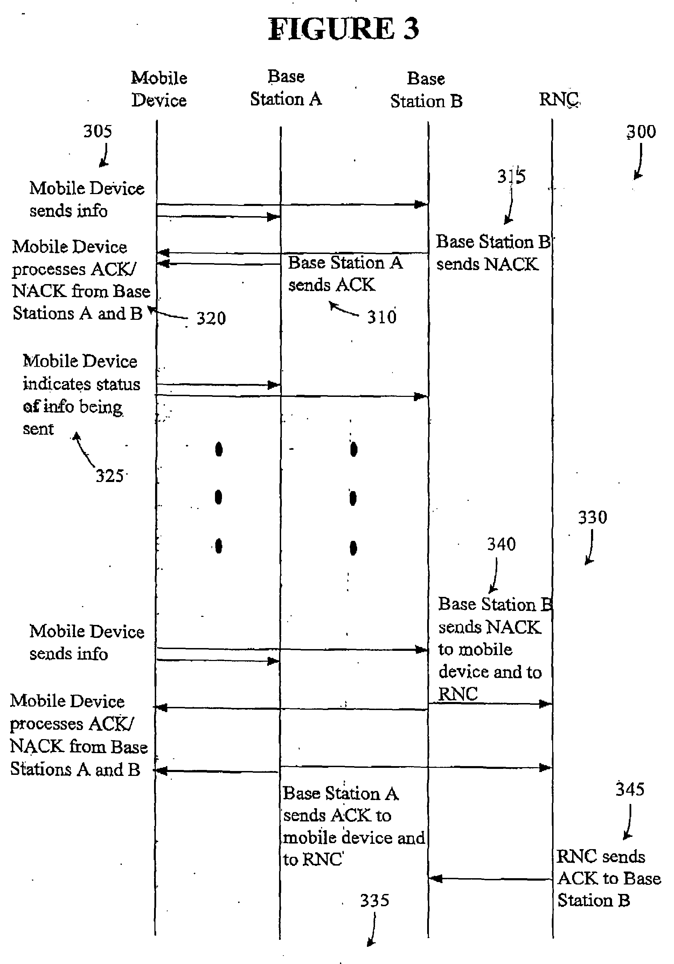

Turning now to Figure 3, a flow diagram illustrating the interoperation of two of the base stations 130, base station A and base station B, one of the mobile devices 120, and the RNC 138 of Figures 1 and 2 is shown. In the flow diagram of Figure 3, it is assumed that a SHO is underway with respect to the mobile device 120 such that the mobile device 120 is communicating with both base station A and base station B. Initially, the mobile device 120 is within the cell associated with base station A and is approaching or entering the cell associated with the base station B.

In a first embodiment, indicated generally as 300, the mobile device 120 sends information, such as a data packet over the data channel 270, to both base station A and base station B (at 305). An acknowledgment (ACK) signal, indicating that the information was properly received by base station A, is illustrated as being delivered by base station A back to the mobile device 120 (at 310). Assuming that base station B, however, has detected an error in the data packet, then base station B returns a negative acknowledgment (NACK) signal to the mobile device 120 (at 315). The mobile device 120 receives the ACK and NACK signals from base stations A and B, respectively and processes the signals (at 320). In particular, the mobile device 120 determines that the data packet was properly received by at least one of the base stations, which in some applications may be adequate to insure efficient operation. Accordingly, the mobile device 120 is now free to transmit a "new" packet of data, but it is desirable to communicate to base station B that the next data packet is not a retransmission of the "old" data packet. This information may be communicated to base station B in a variety of forms (at 325). For example, the mobile device 120 may explicitly indicate that the HARQ process has completed and that the next packet of data will be a "new" packet of data. This explicit indication may be accomplished using L-1 signaling to indicate the completion of the HARQ operation during SHO. The L-1 signaling could be embedded in a control channel of E-DCH, such as E-DPCCH, or piggy-backed in an information field of the HARQ process.

Alternatively, the mobile device 120 may implicitly indicate that the HARQ process has completed and that the next packet of data will be a "new" packet of data. A single bit field may be added to the end of a HARQ process number. If the "new" field is indicated, it implies that the previous HARQ process has completed, and the base station that provided the NACK signal (base station B) will abort the previous HARQ process and treat the next packet of data as "new" data. Thus, in either embodiment, base station B is informed that the next packet of data is "new" data regardless of it having sent a NACK signal for the previous packet of data.

In an alternative embodiment of the instant invention, indicated generally as 330 in Figure 3, the responsibility of notifying base station B that the next packet of data will be "new" data can be placed on the RNC 138. For example, during SHO, base stations A and B may be programmed to provide their ACK/NACK signals to the RNC 138 (at 335 and 340, respectively). The RNC 138 may then communicate to base station B that the next packet of data is "new" data regardless of base station B having sent a NACK signal for the previous packet of data.

Those skilled in the art will appreciate that the processing of the ACK/NACK signals discussed above (at 320), may be more complicated in some applications. In some applications, it may be useful to analyze the reliability that the various ACK/NACK signals received from the base stations 130 are correct. The reliability of the radio link has strong effects on the reliability of the received ACK/NACK feedback comments from each base station at the mobile device. The Downlink (DL) inner loop power control (ILPC) at the mobile device will behave to generate Uplink Transmit Power Control (UL TPC) commands based on the best link quality result among multiple radio links during SHO. The ILPC operates to mitigate the link to the best link among the radio links during SHO. This will create a link imbalance during SHO. The link imbalance during SHO may cause the difference of the reliability measure of the received ACK/NACK feedback. Thus, it is desired to measure the reliability of each link during SHO to determine the reliability of the ACK/NACK feedback. The reliability measure may reduce the probability of a false alarm or missed detection of the ACK/NACK feedback. Since the ILPC for each radio link is achieved by comparing the Signal to Interference Ratio (SIR) of each link to a target SIR during SHO, the SIR measure could be used as an indicator of the reliability when the link is imbalanced. In one embodiment of the instant invention, the SIR and the defined reliability threshold are used to determine the reliability of the radio link for the ACK/NACK feedback as follows,

$$SIR \geq SIR_{Thd} \ldots\ldots Reliable\ Link$$

$$SIR \leq SIR_{Thd} \ldots\ldots Unreliable\ Link$$

where $SIR_{Thd}$ is the threshold of the SIR reliability measure and is optimized based on radio link setting and RF optimization on the field. Once the radio link is considered as a reliable link, the ACK/NACK information from a particular base station may be used in the combining.

Multiple ACK/NACK feedbacks may be received from a plurality of base stations 130 during SHO. Due to link imbalance, the received ACK/NACK signal from each base station 130 is processed independently. Due to the link imbalance during SHO, the ACK/NACK feedback could be unreliable or corrupted. The reliability of the received ACK/NACK signals is evaluated through the algorithm discussed above. Once it is determined which of the received ACK/NACK signals are reliable, each of the reliable ACK/NACK signals are combined. The ACK/NACK combining strategy determines that the HARQ process is complete if at least one of the base stations provides an ACK signal. The determination that at least one reliable ACK signal has been received results in a determination that the data packet has been successfully transmitted and received regardless of any number of NACK signals being received.

While the SHO mode of operation has been described above in the context of two base stations, base station A and base station B, those skilled in the art will appreciate that the SHO mode of operation may involve three or more base stations (e.g., base station A, base station B, base station C ...). Where three or more base stations are involved, the timing associated with the first base station, A, is retained to communicate with all of the other base stations, A, B, ...) regardless of the order in which the base stations are removed from the active list of the UE 120. For example, assume a UE 120 is initially communicating with A but subsequently enters into the SHO mode of operation with B and then C, such that all three base stations are in the UE 120 active set. If A is removed from the active set, leaving B and C in the active set, the UE 120 nonetheless continues to communicate with B and C using the timing information associated with A. As long as the UE 120 remains in the SHO mode of operation, it will continue to use the timing information associated with A until only one base station remains in its active set, at which time the UE 120 will resynchronize with the timing information associated with its now lone base station.

Those skilled in the art will appreciate that the various system layers, routines, or modules illustrated in the various embodiments herein may be executable control units (such as the controllers 210, 250 (see Figure 2)). The controllers 210, 250 may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the controllers 210, 250 cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. It is therefore evident that the particular embodiments disclosed above may be altered or modified and all such variations are considered within the scope and spirit of the invention. Accordingly, the protection sought herein is as set forth in the claims below.

**Claims**

1. A method for controlling a communications system, comprising:

    communicating a first packet of information to a first and second base station;
    receiving an acknowledgment signal from the first base station and a negative acknowledgment signal from the second base station; and
    communicating to at least the second base station that a second packet of information is a new packet of information.

2. A method, as set forth in claim 1, further comprising determining the reliability of the received acknowledgment and negative acknowledgment signals.

3. A method, as set forth in claim 2, wherein determining the reliability of the received acknowledgment and negative acknowledgment signals further comprises determining the reliability of the received acknowledgment and negative acknowledgment signals based on a signal to interference ratio associated with each of the signals.

4. A method, as set forth in claim 2, further comprising combining the received acknowledgment and negative acknowledgment signals that have a determined reliability exceeding a preselected threshold.

5. A method, as set forth in claim 4, wherein communicating to at least the second base station that the second packet of information is a new packet of information further comprises sending a second packet of information that contains new information as a function of the combined acknowledgment and negative acknowledgment signals.

6. A method, as set forth in claim 1, wherein communicating to at least the second base station that the second packet of information is a new packet of information further comprises including information with the second packet of information indicating that the second packet of information is a new packet of information.

7. A method, as set forth in claim 1, wherein communicating to at least the second base station that the second packet of information is a new packet of information further comprises providing a signal separate from the second packet of information indicating that the second packet of information is a new packet of information.

8. A method, as set forth in claim 7, wherein providing a signal separate from the second packet of information indicating that the second packet of information is a new packet of information further comprises providing the separate signal from a mobile device.

9. A method, as set forth in claim 7, wherein providing a signal separate from the second packet of information indicating that the second packet of information is a new packet of information further comprises providing the separate signal from a radio link controller.

10. A method for controlling a communications system, comprising:

    receiving a first packet of information;
    sending a negative acknowledgment signal; and
    receiving a communication that a second packet of information is a new packet of information.

**FIGURE 1A**

EP 1 638 362 A2

EP 1 638 362 A2

**FIGURE 1B**

FIGURE 2

EP 1 638 362 A2

# FIGURE 3

| Mobile Device | Base Station A | Base Station B | RNC |

305

Mobile Device sends info

315

Base Station B sends NACK

Mobile Device processes ACK/ NACK from Base Stations A and B

320

Base Station A sends ACK

310

Mobile Device indicates status of info being sent

325

300

330

340

Base Station B sends NACK to mobile device and to RNC

Mobile Device sends info

Mobile Device processes ACK/ NACK from Base Stations A and B

345

Base Station A sends ACK to mobile device and to RNC

RNC sends ACK to Base Station B

335